# EUROPÄISCHE PATENTSCHRIFT

(11) **EP 3 028 075 B1**
(45) Veröffentlichungstag und Bekanntmachung des Hinweises auf die Patenterteilung: **28.11.2018**
(21) Anmeldenummer: 14755772.2
(22) Anmeldetag: 31.07.2014
(51) Int. Cl.: G01W 1/00, G08C 17/02, H04H 60/68, G08B 25/01

(54) **VERFAHREN ZUM AUSSTRAHLEN VON WETTERINFORMATIONEN UND/ODER WETTERVORHERSAGE-INFORMATIONEN**
METHOD FOR TRANSMITTING WEATHER INFORMATION AND/OR WEATHER FORECAST INFORMATION
PROCÉDÉ DE DIFFUSION D'INFORMATIONS MÉTÉO ET/OU DE PRÉVISIONS MÉTÉO

(30) Priorität: 31.07.2013 DE 102013108234; 04.02.2014 DE 102014101342
(43) Veröffentlichungstag der Anmeldung: 08.06.2016
(73) Patentinhaber: NavPos Systems GmbH, 88689 Uhldingen (DE)
(72) Erfinder: BLOMENHOFER, Eduarda Taveira, 88690 Uhldingen (DE)
(74) Vertreter: Patentanwälte und Rechtsanwalt Weiß, Arat & Partner mbB
(86) Internationale Anmeldenummer: PCT/EP2014/002102
(87) Internationale Veröffentlichungsnummer: WO 2015/014493

(56) Entgegenhaltungen:
- EP-A1- 2 003 468
- WO-A1-2012/089280
- WO-A2-2006/087217
- DE-A1-102011 079 293
- BROUWER PETER A I: "Space-Borne Tsunami Warning System", SPACE TECHNOLOGIES FOR THE BENEFIT OF HUMAN SOCIETY AND EARTH, SPRINGER NETHERLANDS, DORDRECHT, PAGE(S) 257 - 289 , 1 January 2009 (2009-01-01), XP009501301, ISBN: 978-1-4020-9572-6 Retrieved from the Internet: URL:http://epo.summon.serialssolutions.com /2.0.0/link/0/eLvHCXMwtV1JS8QwFA6OXtSLGzgu UMTbUGmTpmmP02EcvUpRPIUsLXjRYZb_78s0TZcZkD l4KSWQZnnp6_u-vgWhRw1vkZBp7IukCPyIKOoLXRAD VUoF5gFOqAlO_pxE-Yy9zUy1hrpKZ9P2r5KGNpC1iZ zdQ9ruodAA9yBzuILU4doziLvUaxXXAQi4aOhyQMHO jTADpVZ-rRrivvbXNMz5FA6Q44UBmRvXeee9Oxo_vb ZP1mYQP_tZ
- ELLIOTT D KAPLAND ET AL: "Chapter 10: Galileo", 1 January 2006 (2006-01-01), UNDERSTANDING GPS PRINCIPLES AND APPLICATIONS 2ND EDITION, ARTECH HOUSE, INC, PAGE(S) 559 - 594, XP009501299, ISBN: 1-58053-894-0

## Beschreibung

Die Erfindung betrifft ein Verfahren zum Ausstrahlen von Wetterinformationen und/oder Wettervorhersage-Informationen.

### Stand der Technik

### Referenzen / Quellenverzeichnis:

[1] Europäische Kommission, Egnos und Galileo Erläuterung der EU- Satellitennavigationsprogramme, ISBN 978-92-79-23555-9, doi:10.2769/32609
[2] European GNSS (Galileo) Open Service Signal In Space Interface Control Document (OS SIS ICD), Issue 1.1, September 2010
[3] ESA website www.esa.int
[4] GSA website www.gsa.europa.eu
[5] EUMETSAT Website www.eumetsat.int
[6] US NOAA Website www.noaa.gov
[7] www.tomtom.com/de de/services/live/weather
[8] http://www.meteoalarm.info/
[9] Aeronautical Information Manual (AIM) Official Guide to Basic Flight Information and ATC Procedures, U.S. Department of Transportation /Federal Aviation Administration, February 9, 2012.
[10] FAA Advisory Circular AC-00-45, "Aviation Weather"
[11] RTCA Do-260() Minimum Operational Performance Standards for 1090 MHz Extended Squitter Automatic Dependent Surveillance - Broadcast (ADS-B) and Traffic Information Services - Broadcast (TIS-B)
[12] Galileo Publikationen in "GPS World"
[13] Galileo Publikationen in "GNSS Inside"
[14] Copernicus Website http://www.copernicus.eu
[15] Brouwer, et al. Space Borne Tsunami Warning System, 2009
[16] Kaplan, et al., Understanding GPS, 2nd Ed., 2006, ISBN-10: 1-58053-894-0

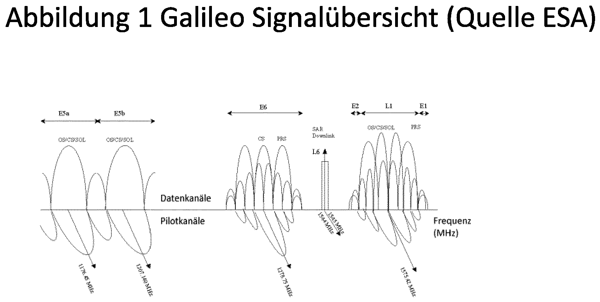

Das bekannte US NAVSTAR GPS (Global Positioning System) bietet einen zivilen "Standard Positioning Service (SPS)" und einen militärischen "Precise Positioning Service (PPS)" Positionsdatenservice. Das europäische Satellitennavigationssystem Galileo dagegen bietet die folgenden Dienste (siehe Ref.1 und auch Figur 1) an:
- Offener Dienst ("Open Service", OS):
- Kommerzieller Dienst ("Commercial Service", CS):
- Sicherheitskritischer Dienst ("Safety-of-Life Service", SoL):
- Öffentlich regulierter Dienst ("Public Regulated Service", PRS):
- Such- und Rettungsdienst ("Search and Rescue", SAR)
Bei obigen Diensten sind Verbesserungen bei den Serviceleistungen Verfügbarkeit, Robustheit, Zuverlässigkeit, Integrität und Genauigkeit beabsichtigt. Viele zukünftige GNSS (Global Navigation-Satellite-Systeme) - Empfänger werden zudem als Kombinationsempfänger von zum Beispiel GPS und Galileo Diensten zum Zwecke der Verbesserung der Positionsdatenleistung angeboten werden.

Mit [15, 16] wird vorgeschlagen, den kommerziellen Dienst von Galileo für Wetterwarnungen, Unfallwarnungen, Verkehrsinformationen und Karten-Updates zu verwenden.

Mit dieser Erfindung wird vorgeschlagen, mit Galileo Diensten nicht nur Wetter- und Unfallwarnungen auszusenden, sondern generell Wetterinformationen und Wettervorhersagen mit Galileo Diensten und Signalen, wie z.B. dem kommerziellen Dienst von Galileo, auszusenden.

Für Wetterdaten oder Wettervorhersagen gibt es heute unabhängige Datenlinks, um diese Daten insbesondere über Radio und TV oder über das Internet zu erhalten. Diese meist privaten Wetterdatendienste benutzen ihre eigenen Protokolle. Kein GNSS sendet Wetterdaten oder Alarminformationen mit seinen Diensten bzw. Signal-In-Space aus. Es gibt somit keine Möglichkeit zum direkten Signalempfang von Wetterdaten mit GNSS Empfängern bzw. -Einrichtungen. Einige GPS Navigationsgerätehersteller behelfen sich, indem sie Wetterdaten als eigenen Dienst anbieten und die Information über z.B. Mobilfunk oder Radio verbreiten (siehe TomTom). "TomTom Wetter" gehört zu den LIVE Services von TomTom.

Wetterdaten und Positionsdienste sind nicht weltweit erhältlich als kombinierte Dienste, die direkt empfangen und benutzt werden können, vermengt und dargestellt in einer Positions- und Navigationseinrichtung.

### Aufgabe

Aufgabe der vorliegenden Erfindung ist es, Wetter-Informationen und Wettervorhersage-Informationen für Benutzer besser zugänglich zu machen.

### Lösung der Aufgabe

Zur Lösung der Aufgabe führen die Merkmale von Anspruch 1.

Diese neuartigen Galileo Dienste mit Wetterinformationen und Wettervorhersageinformationen sind ein zusätzlicher wertvoller Informationsservice und schaffen ein deutliches Unterscheidungsmerkmal für die Akzeptanz von Galileo bei den GNSS Nutzern. Dieses Unterscheidungsmerkmal ist ein Vorteil für Galileo im Vergleich zu GPS, Glonass und Compass, welche einen reinen Positionsdatenservice anbieten.

Der heutige kommerzielle Service von Galileo ist noch weitgehend undefiniert. Wetterinformation und/oder Wettervorhersageinformationen könnten zusätzlich zu den bereits vorgeschlagenen Alarmdiensten z.B. als kommerzieller Service von Galileo Satelliten abgestrahlt werden.

Signalanwärter für diesen neuen Dienst sind die Signalbänder von Galileo, welche für kommerzielle Dienste auf L1 und/oder E5 und/oder E6, wie in Figur 1 gezeigt, vorgesehen sind. Aber auch noch ungenutzte Signalbänder (z.B. E5b) und/oder neue Signalbänder bei der zweiten Generation von Galileo könnten hierfür genutzt bzw. geplant werden.

Es gibt eine Anzahl von möglichen Wetterdiensten rund um die Welt, welche angefragt werden können, um als Datenquellen für den vorgeschlagenen Galileo-Wetterinformationsdienst zu dienen.

EUMETSAT (European Organization for the Exploitation of Meteorological Satellites) kann sicherlich ein Hauptbeiträger und eine Datenquelle für Galileo Wetter Informationsdienste sein, da er in Europa stationiert ist und seine Daten schon als Produkt anbietet. Datenzugang zu Daten und Produkten kann durch das Earth Observation Portal (EOP) erfolgen.

Somit können die nahezu Echtzeit Meteosat-, Metop-, Jason-2- Daten und Produkte benutzt werden. Ein Beispiel hierfür ist der EUMETSAT Metereoalarm für Wetterwarnungen (siehe http://www.meteoalarm.info/). Der Eumetsat Meteoalarm könnte als neuer Galileo Dienst mit dem Galileo SIS verbreitet werden.

In anderen Regionen der Welt können ähnliche Wetterdienste und Informationen herangezogen werden. Von besonderer Bedeutung sind die Regionen, welche nicht mit Mobilfunk erreicht werden können. Hierzu zählen insbesondere die ozeanischen Regionen und auch wenig erschlossene Regionen, welche noch nicht über ausgebaute Mobilfunknetze verfügen oder deren Nutzung zusätzliche Kosten verursacht.

In den USA kann beispielsweise der nationale Wetterdienst (NWS) welcher ein Teil der nationalen ozeanischen und atmosphärischen Administration (NOAA) der Regierung der Vereinigten Staaten ist, als eine Datenquelle für den vorgeschlagenen Galileo Wetterinformationsdienst (GALWIS) dienen. NWS unterscheidet Landnutzer über Kontinental USA und maritime Nutzer in den ozeanischen Gebieten. Hierbei unterteilt der nationale US Wetterdienst (NWS) die Regionen in Meereszonen, welche für die ozeanischen Wetterdienste in den einzelnen Regionen genutzt werden können (siehe http://www.nws.noaa.gov/om/marine/zone/hsmz.htm). NOAA/NWS bietet hierbei den Dienst "U.S. High Seas Marine Text Forecasts by Area" an. Eine wichtige Wetterinformation könnte Strömungsinformation und Wellenhöhe sein. Für Luftfahrtnutzer gibt es eigene Wetterdienste, welche z.B. im AIM (siehe Ref. 9) und AC-00-45 (siehe Ref. 10) beschrieben sind.
Hierzu zählen (in englischer Sprache, da international anerkannte Fachbegriffe)
1. Airmen's Meteorological Conditions (AIRMET)
2. Convective Significant Meteorological Conditions (SIGMET) -Convective SIGMETs (international auch bekannt als SIGMET for Convection)
3. Aviation Routine Weather Reports (METAR)
4. Special Aviation Reports (SPECI)
5. Next Generation Radar (NEXRAD)
6. Notice to Airmen (NOTAM)
7. Pilot Weather Reports (PIREP)
8. Significant Meteorological Information (SIGMET)
9. Special Use Airspace (SUA) Status
10. Terminal Aerodrome Forecast (TAF) and their amendments (AMEND)
11.Temperature Aloft
12. Winds Aloft
13. other

Die Nachrichtenabstrahlung könnte sich an den Produkten, Übertragungsintervallen und Protokollen von FIS-B (Flight Information Services - Broadcast, Ref. RTCA Do-260()) orientieren.

Nationale Wetterdienste existieren, insbesondere EUMETSAT in Europa und NOAA (National Ozeanic and Atmospharic Administration) in den USA.

Der erste Schritt ist, meteorologische Daten zu erhalten, bezogen auf
- Oberflächenbeobachtungen
- Meeresbeobachtungen
- Beobachtungen des oberen Luftraums
- Raumbeobachtungen

Oder es ist besser, existierende meteorologische Daten anzufragen, wie z.B. bei EUMETSAT, NOAA/NWS, etc. und diese Daten (z.B. unter einem Lizenzabkommen) für die Erzeugung und Verbreitung von Galileo Wetterdiensten zu nutzen.

Beispiele für Aufgaben und Inhalte der Galileo-Wetterinformationsdienste:
- Ausstrahlung von aktueller Wetterinformation über Gebiete in Form von geobezogenen Wetterdaten, wie Temperatur, Druck, Feuchtigkeit, Windgeschwindigkeit, zzgl. Information über Wetterkonditionen, wie wahrscheinlicher Sonnenschein, wahrscheinlicher Regen, wahrscheinlicher Schnee, Sturm etc.
- Ausstrahlung von Wetterinformationsvoraussagen über Gebiete in Form von geobezogenen Wetterdaten, wie Temperatur, Druck, Feuchtigkeit, Windgeschwindigkeit, zzgl. Information über Wetterbedingungen, wie Sonnenscheinwahrscheinlichkeit, Regenwahrscheinlichkeit, Schneewahrscheinlichkeit, Sturm, etc.
- Ausstrahlung von Wetter Informationen für Luftfahrtnutzer nach dem Vorbild von Aviation Weather Spezifikationen (siehe AIM und AC-00-45).
- Ausstrahlung von Wetterinformationen für maritime Nutzer nach dem Vorbild von internationalen IMO Standards
Es wird angenommen, dass in Zukunft die gegenwärtigen GPS-Empfänger durch neue GPS oder Galileo-Empfänger ersetzt werden, vermutlich kombinierte GNSS, insbesondere GPS & Galileo-Empfänger. Aber für letzteres muss Galileo bessere Leistungen und/oder neue Dienste für den Benutzer anbieten.
Die Produktlebensdauer der GNSS-Empfänger differiert abhängig von ihrer Anwendung. GNSS-Empfänger, die als luftgestützte, schiffgestützte oder fahrzeuggestützte Navigationsvorrichtungen installiert sind, können für mehr als 10 Jahre erhältlich sein und benutzt werden, während personenbezogene Benutzereinrichtungen, wie Smartphones, typischerweise eine Produktlebenszeit von nur wenigen Jahren haben können. Danach verdrängen neue Modelle die frühere Produktgeneration.

Für die Nutzer und die Marktakzeptanz von Galileo ist nicht nur die Qualität der Positionierung- und Zeitbestimmungsdienste interessant. Im Gegenteil, entsprechend der hohen Qualität von US-NAVSTAR-GPS, GLONASS und Galileo ist es evident, dass neue Eigenschaften und Dienste die Entscheidung des Benutzers beeinflussen werden, um einen Galileo-Empfänger zu kaufen oder nicht!

Globale Wetterdatendienste existieren, insbesondere NOAA in den USA und EUMETSAT in Europa, für Wetterdienste über große Regionen (Kontinente und ozeanische Bereiche). Zusätzlich existieren auch terrestrische lokale Wetterbeobachtungsdienste. Das Konzept sieht vor, alle benutzbaren Wetterinformationen, sei es, dass die raumgestützt, terrestrisch gestützt sind oder mit Ballon- oder Flugzeugsensoren etc. gemessen werden, zu sammeln. Es wird ein Galileosystem-Interface zu diesen Wetterdienstorganisationen eingerichtet.

Folgendes ist vorgesehen:
1. Sammeln terrestrischer und raumgestützter Wetterdaten und anderer relevanter Informationen, um ein komplettes Bild/Film des globalen Wetters kontinuierlich einzurichten.
2. Einrichtung einer Struktur, insbesondere eines Koordinatengitters, als eine Georeferenz für die meteorologischen Daten, die regionale Segmente dieser meteorologischen Daten generieren mit dazugehörigen Wetterinformationen, insbesondere Sonnenscheinwahrscheinlichkeit, Regenwahrscheinlichkeit, Schnee- und Eiswahrscheinlichkeit, Sturmbedingungen, etc.
3. GalWIS-Nachrichtengenerierung,
4. GalWIS-Nachrichtenverschlüsselung
5. GalWIS-Nachrichtenausstrahlung,
6. Empfänger des kommerziellen Dienstes von Galileo (Subscriber) sind fähig, diesen Service zu erhalten und zu entschlüsseln.
7. GalWIS-Subscriber sind fähig, die Information auf dem Display ihres Galileo-Empfängers zu sehen oder über ein Interface des Galileo-Empfängers zu lesen.

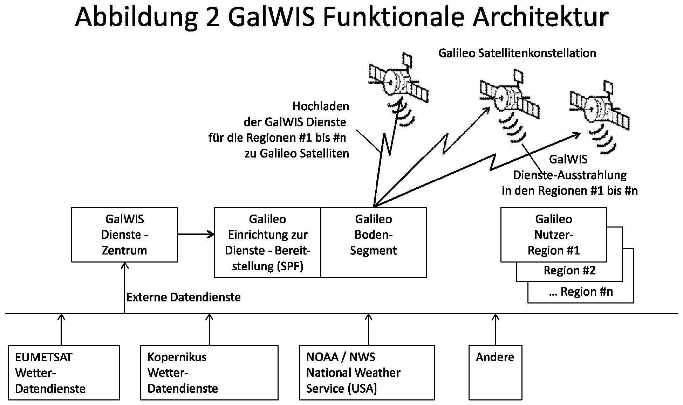

Figur 2 zeigt die funktionale Architektur des vorgeschlagenen GalWIS Dienstes.

Neben EUMETSAT, NOAA, etc. können auch die Dienste des Europäischen Kopernikusprogramms als Eingangsdaten zur Erzeugung von GalWIS Nachrichten verwendet werden. Der Kopernikusservice bezieht sich auf sechs hauptsächliche Themenbereiche:
- Landüberwachung
- Seeüberwachung
- Atmosphärenüberwachung
- Notfallmanagement
- Sicherheit
- Klimawechsel

Alle diese Themenbereiche sind kostenlos zugänglich für die Nutzer. Beispielsweise können die Kopernikusdienste Seeüberwachung und Atmosphärenüberwachung als Inputdaten für GalWIS verwendet werden.

### Kopernikus Seeüberwachung:

Der Kopernikus Seeüberwachungsdienst stellt reguläre und systematische Informationen über den Zustand von Ozeanen und regionalen Wasserflächen zur Verfügung. Die Beobachtungen und Voraussagen, die von dem Service bereitgestellt werden, unterstützen alle seebezogenen Tätigkeiten. Z.B. helfen die Bereitstellungen von Daten über Strömungen, Winden und Meereseis den Schiffsroutenservice, Off-Shore Operationen oder Suchen und Hilfsoperationen zu verbessern, was zu einer Verbesserung der Seesicherheit beiträgt.

Die o.g. Kopernikus Dienstekönnen in GalWIS Nachrichten übertragen werden, die mit dem Galileo SIS verbreitet werden, der von Galileo Empfängern empfangen wird. Die GalWIS Nachrichten und Informationen können auch Einrichtungen von Galileo Nutzern in Form von Lifeticker oder als graphische Informationen in einer Kartendarstellung dargestellt werden.

Dieser Galileo-Wetterdienst könnte auch bei EGNOS und anderen GNSS Konstellationen oder deren Verbesserungssystemen implementiert und abgestrahlt werden, also auch bei GPS, Glonass, Compass, EGNOS, WAAS und anderen Navigationssatellitensystemen.

## Patentansprüche

1. Verfahren zum Ausstrahlen von Wetterinformationen und/oder Wettervorhersage- Informationen, wobei hierfür Signale und Dienste des europäischen Galileo-Satellitennavigationssystems verwendet werden, indem für die Ausstrahlung von Wetterdiensten die Signale und Dienste von Galileo, z.B. der kommerzielle Galileo-Dienst, als Daten-Links benutzt werden, **dadurch gekennzeichnet, dass** existierende Wetterdaten und/oder Wettervorhersage-Daten gesammelt werden, um fortlaufend textuelle und/oder graphische Information (z.B. als Text, Bild oder Film) des globalen Wetters und/oder des voraussichtlichen Wetters einzurichten.

2. Verfahren nach Anspruch 1, **dadurch gekennzeichnet, dass** die Galileo-Wetter-Informationsdienste auf einem Display eines Galileo-Empfängers und/oder einer Navigations-Einrichtung dargestellt werden.

3. Verfahren nach wenigstens einem der vorhergehenden Ansprüche, **dadurch gekennzeichnet, dass** die Nachricht von Wetter-Informationen, Wettervorhersage-Informationen mit präzisen lokalen Informationen verknüpft werden, welche mit der Position des Anwenders verglichen werden.

4. Verfahren nach Anspruch 3, **dadurch gekennzeichnet, dass** für die Bestimmung der Anwenderposition insbesondere ein GNSS (insbesondere ein GPS und/oder Galileo-Satelliten-Positionierungssystem) benutzt wird.

5. Verfahren nach wenigstens einem der vorhergehenden Ansprüche, **dadurch gekennzeichnet, dass** für die Wettervorhersage-Informationen eine Routennavigation des Anwenders mit einer Karte verknüpft wird, wobei Wetterdaten und/oder Wettervorhersagedaten als zusätzliche Information entlang einer vorhergesagten Anwenderroute benutzt wird.

6. Verfahren nach wenigstens einem der vorhergehenden Ansprüche, **dadurch gekennzeichnet, dass** eine Struktur, insbesondere entlang einem Koordinatengitternetz eingerichtet und geo-bezogene meteorologische Informationen generiert und ausgestrahlt werden, indem mindestens ein Dienstesignal des Galileo Satellitennavigationssystems verwendet wird.

7. Verfahren nach wenigstens einem der vorhergehenden Ansprüche, **dadurch gekennzeichnet, dass** die Ausstrahlung von aktuellen Wetter-Informationen und von Wettervorhersage-Informationen über Gebiete geo-bezogene Wetterdaten, wie Temperatur, Druck, Feuchtigkeit, Windgeschwindigkeit und Informationen über Wetterbedingungen, wie Sonnenscheinwahrscheinlichkeit, Regenwahrscheinlichkeit, Schneewahrscheinlichkeit, Sturm etc., umfassen.

8. Verfahren nach wenigstens einem der vorhergehenden Ansprüche, **dadurch gekennzeichnet, dass** die Nachrichten der Wetterdaten und Wettervorhersagedaten der Galileo-Satelliten auf bestimmte Regionen bezogen werden.

9. Verfahren nach wenigstens einem der vorhergehenden Ansprüche, **dadurch gekennzeichnet, dass** eine Nachricht in Form eines Livetickers auf dem Galileo-Rx Anwender-Bildschirm dargestellt wird.

## Claims

1. A method for transmitting weather information and/or weather prediction information, wherein signals and services of the European Galileo satellite navigation system are used for this purpose in that the signals and services of Galileo, e.g. the Galileo Commercial Service, are used as data links for transmitting weather services, **characterised in that** existing weather data and/or weather prediction data are collected to continuously establish textual and/or graphic information (e.g. as text, image or film) of the global weather and/or the expected weather.

2. The method according to Claim 1, **characterised in that** the Galileo weather information services are represented on a display of a Galileo receiver and/or a navigation device.

3. The method according to at least one of the preceding claims, **characterised in that** the announcement of weather information, weather prediction information, is linked to precise local information which is compared to the position of the user.

4. The method according to Claim 3, **characterised in that**, in particular, a GNSS (in particular a GPS and/or Galileo satellite positioning system) is used to determine the user position.

5. The method according to at least one of the preceding claims, **characterised in that**, for the weather prediction information, a route navigation of the user is linked to a map, wherein weather data and/or weather prediction data are used as additional information along a predicted user route.

6. The method according to at least one of the preceding claims, **characterised in that** a pattern is established, in particular along a coordinate grid, and geo-based meteorological information is generated and transmitted by using at least one service signal of the Galileo satellite navigation system.

7. The method according to at least one of the preceding claims, **characterised in that** the transmission of current weather information and weather prediction information across regions comprises geo-based weather data, such as temperature, pressure, humidity, wind speed and information relating to weather conditions, such as probability of sun, probability of rain, probability of snow, storm etc.

8. The method according to at least one of the preceding claims, **characterised in that** the announcements of the weather data and weather prediction data of the Galileo satellites are based on particular areas.

9. The method according to at least one of the preceding claims, **characterised in that** an announcement is represented in the form of a live ticker on the Galileo Rx user screen.

## Revendications

1. Procédé de diffusion d'informations météorologiques et/ou d'informations de prévisions météorologiques, dans lequel sont utilisés à cet effet les signaux et services du système européen de navigation par satellite Galileo, en utilisant comme liaisons de données pour la diffusion les signaux et services de Galileo, par exemple le service commercial Galileo,
**caractérisé par le fait que** les données météorologiques et/ou données de prévisions météorologiques existantes sont collectées pour créer en permanence des informations textuelles et/ou graphiques (par exemple, sous forme de texte, d'image ou de film) de la météorologie globale et/ou des prévisions météorologiques.

2. Procédé selon la revendication 1, **caractérisé par le fait que** les services d'informations météorologiques Galileo sont représentés sur un écran d'affichage d'un récepteur Galileo et/ou d'un dispositif de navigation.

3. Procédé selon au moins l'une des revendications précédentes, **caractérisé par le fait que** le message d'informations météorologiques, d'informations de prévisions météorologiques est liée à des informations locales précises qui sont comparées à la position de l'utilisateur.

4. Procédé selon la revendication 3, **caractérisé par le fait que** pour déterminer la position de l'utilisateur est utilisé en particulier un GNSS (en particulier un GPS et/ou système de positionnement par satellite Galileo).

5. Procédé selon au moins l'une des revendications précédentes, **caractérisé par le fait que**, pour les informations de prévisions météorologiques, un itinéraire de navigation de l'utilisateur est lié à une carte, dans lequel les données météorologiques et/ou les données de prévisions météorologiques sont utilisées comme informations additionnelles le long d'un itinéraire d'utilisateur prédit.

6. Procédé selon au moins l'une des revendications précédentes, **caractérisé par le fait qu'**une structure est créée, en particulier le long d'une grille de coordonnées, et des informations météorologiques liées à la géographie sont générées et diffusées en utilisant au moins un signal de service du système de navigation par satellite Galileo.

7. Procédé selon au moins l'une des revendications précédentes, **caractérisé par le fait que** la diffusion d'informations météorologiques et d'informations de prévisions météorologiques actuelles sur des régions comportent des données liées à la géographie, telles que température, pression, humidité, vitesse du vent et des informations sur les conditions météorologiques, telles que probabilité d'ensoleillement, probabilité de pluie, probabilité de neige, tempête, etc.

8. Procédé selon au moins l'une des revendications précédentes, **caractérisé par le fait que** les messages de données météorologiques et de données de prévisions météorologiques des satellites Galileo sont liées à des régions spécifiques.

9. Procédé selon au moins l'une des revendications précédentes, **caractérisé par le fait qu'**un message sous forme d'un suivi en direct est affiché à l'écran d'utilisateur Galileo Rx.
